# EUROPEAN PATENT SPECIFICATION

(11) **EP 4 549 167 B1**
(45) Date of publication and mention of the grant of the patent: **17.06.2026**
(21) Application number: 24773343.9
(22) Date of filing: 28.05.2024
(51) Int. Cl.: B42D 25/324, B42D 25/328, B42D 25/36, B42D 25/373, B42D 25/29, B42D 25/425, G02B 5/10

(54) **ANTI-COUNTERFEITING ELEMENT AND ARTICLE HAVING ANTI-COUNTERFEITING ELEMENT**
FÄLSCHUNGSSICHERES ELEMENT UND ARTIKEL MIT FÄLSCHUNGSSICHEREM ELEMENT
ÉLÉMENT ANTICONTREFAÇON ET ARTICLE COMPORTANT UN ÉLÉMENT ANTICONTREFAÇON

(30) Priority: 20.09.2023 CN 202311220343
(43) Date of publication of application: 07.05.2025
(73) Proprietor: Zhongchao Special Security Technology Co., Ltd, Beijing 100070 (CN); China Banknote Printing and Minting Corp., Beijing 100044 (CN)
(72) Inventor: YANG, Dong, Fengtai District Beijing 100070 (CN)
(74) Representative: J A Kemp LLP
(86) International application number: PCT/CN2024/095658
(87) International publication number: WO 2025/060475

(56) References cited:
- EP-B1- 2 972 563
- WO-A1-2022/227741
- WO-A1-2022/227741
- CN-A- 111 823 749
- CN-A- 115 230 363
- DE-A1- 102005 061 749
- DE-A1- 102013 001 734
- US-A1- 2008 258 456
- US-A1- 2019 390 328

## Description

### TECHNICAL FIELD

The present application relates to the anti-counterfeiting technical field, in particular to an anti-counterfeiting element and an article having the anti-counterfeiting element.

### BACKGROUND

WO 2022/227741 A1 discloses an optical anti-counterfeiting element, a design method therefor, and an anti-counterfeiting product. DE 10 2013 001 734 A1 discloses a security element having groove- or rib-shaped structural elements. EP 2 972 563 A1 discloses a variable device exhibiting a non-diffractive three-dimensional optical effect. DE 10 2005 061 749 A1 discloses an optically variable security element for making valuable objects safe with an achromatic reflecting micro-structure taking the form of a mosaic made from achromatic reflecting mosaic elements.

In order to prevent counterfeiting by means of scanning and copying, optical anti-counterfeiting technology is widely used in various high-security or high-value-added printed matter such as banknotes, cards and product packaging, and has achieved very good results.

Disclosed in the prior art is an anti-counterfeiting element comprising a plurality of reflective facets, wherein the orientations of different reflective facets are roughly randomly distributed, and the orientations of the plurality of reflective facets define the directions of emergent light for incident light in a predetermined direction, thereby forming a dynamic effect in which the appearance varies with the observation angle. However, the anti-counterfeiting element needs to use a combination of multiple reflective facets to form a large area so as to enable the angles of emergent light to be uniformly distributed, and the combination of multiple reflective facets would also reduce the pattern resolution of the dynamic effect.

### SUMMARY OF THE INVENTION

In view of this, the present application provides an anti-counterfeiting element and an article having the anti-counterfeiting element, so as to solve the problem that uniform distribution of the angles of emergent light cannot be achieved by a single reflective facet of the anti-counterfeiting element in the prior art and that the pattern resolution of the dynamic effect thereof is low.

The invention is defined in the independent claim. Further aspects and preferred embodiments are defined in the dependent claims. Any aspects, embodiments and examples of the present disclosure which do not fall under the scope of the appended claims do not form part of the invention and are merely provided for illustrative purposes.

In a first aspect, the present application provides an anti-counterfeiting element as defined in claim 1.

Beneficial effect: By the arrangement of the plurality of curved-surface structures arranged in the feature area, with each curved-surface structure being shaped in a curved manner along the first direction, for incident light in a predetermined direction, emergent light from the curved-surface structure can come out over a fan-shaped direction range, so that angle distribution of the emergent light is more uniform, that is, an effect equivalent to the combination effect obtained by a plurality of reflective facets in the prior art can be obtained with each single curved-surface structure, therefore, not only a dynamic effect with higher resolution can be achieved, but also a more uniform angle distribution of emergent light can be achieved, so that a finer and more stable appearance pattern can be realized, thereby increasing the viewable angle range.

In an optional embodiment, the bending degrees of the curved-surface structure along both the first direction and the second direction are measured by a slope.

In an optional embodiment, slope distributions of the curved-surface structure along both the first direction and the second direction are continuous.

Beneficial effect: By setting the slope distributions of the curved-surface structure along both the first direction and the second direction to be continuous, there is no sharp corner on the curved-surface structure, so that the angles of emergent light are more uniform, the efficiency of emergent light is higher, and the quality of final product is higher.

In an optional embodiment, a slope difference along the first direction of at least two segments of the curved-surface structure is greater than 0.05.

Beneficial effect: By setting the slope difference along the first direction of segments of the curved-surface structure to be relatively large, the viewable angle range of emergent light can be increased.

In an optional embodiment, a slope difference along the first direction of at least two segments of the curved-surface structure is greater than 0.1.

In an optional embodiment, respective ones of the plurality of curved-surface structures have the same slope distribution range along the first direction.

Beneficial effect: By setting respective ones of the plurality of curved-surface structures to have the same slope distribution range along the first direction, the angle range of emergent light from each curved-surface structure is roughly the same, so that the efficiency of emergent light is higher.

In an optional embodiment, cross-sections of respective ones of the plurality of curved-surface structures along the first direction at least partially coincide.

In an optional embodiment, cross-sections of respective ones of the plurality of curved-surface structures along the first direction have identical shapes.

Beneficial effect: By setting cross-sections of respective ones of the plurality of curved-surface structures along the first direction to have identical shapes, the production efficiency can be improved.

In an optional embodiment, a cross-section of the curved-surface structure along the first direction is convex and/or concave.

In an optional embodiment, a distance between the highest point and the lowest point of a cross-section of the curved-surface structure along the first direction is greater than 3µm.

Beneficial effect: Since the cross-section of the curved-surface structure along the first direction is provided in a convex shape, a concave shape, or a wave shape, by limiting the distance between the highest point and the lowest point of the cross-section of the curved-surface structure along the first direction to be greater than 3µm, the distance between the highest point and the lowest point is not too small, so that any undesired diffraction effect is prevented from being caused by the distance being too small.

In an optional embodiment, an average slope of the curved-surface structure along the second direction is a predetermined value, and when an observation position is changed along the second direction, an observed appearance of the feature area varies with the change of the observation position.

Beneficial effect: By setting the average slope of the curved-surface structure along the second direction to a predetermined value, information of a dynamic effect can be encoded by means of the average slope of the curved-surface structure along the second direction, so that the curved-surface structure can achieve a pre-designed dynamic effect.

In an optional embodiment, a slope difference along the second direction within at least a portion of the curved-surface structure is less than 0.2.

Beneficial effect: By setting the slope difference along the second direction within at least a portion of the curved-surface structure to be relatively small, the viewable angle range can be increased and the resolution can be improved.

In an optional embodiment, a slope difference along the second direction within at least a portion of the curved-surface structure is less than 0.05.

In an optional embodiment, the curved-surface structure is substantially straight along the second direction.

In an optional embodiment, at least part of the plurality of curved-surface structures are shaped in a curved manner along the second direction.

In an optional embodiment, a direction perpendicular to the surface of the substrate is a height direction, and a maximum height difference of a shape of the curved-surface structure shaped in a curved manner along the second direction is less than a maximum height difference of a shape of the curved-surface structure shaped in a curved manner along the first direction.

In an optional embodiment, a length of the curved-surface structure along the second direction is less than 20µm; and/or, a length of the curved-surface structure along the second direction is greater than 3µm.

Beneficial effect: By limiting the length of the curved-surface structure along the second direction, the curved-surface structure can be prevented from extending too long along the second direction, because the longer the curved-surface structure is, the more difficult the production process thereof would be.

In an optional embodiment, a direction perpendicular to the surface of the substrate is a height direction, and respective ones of the plurality of curved-surface structures have randomly-set height differences.

Beneficial effect: By setting respective ones of the plurality of curved-surface structures to have randomly-set height differences, the occurrence of undesired diffraction phenomena can be suppressed.

In an optional embodiment, the curved-surface structure is at least partially covered with a metal layer;
and/or, the curved-surface structure is at least partially covered with a dielectric layer;
and/or, the curved-surface structure is at least partially provided with a secondary microstructure thereon;
and/or, a difference of refractive indices of materials on two sides of the curved-surface structure is greater than 0.1.

Beneficial effect: By providing a metal layer and/or a dielectric layer covered on the curved-surface structure, the reflection effect of the curved-surface structure can be enhanced, and the appearance of the curved-surface structure having a color that varies with the change of observation angle can be achieved; By limiting the difference of the refractive indices of materials on two sides of the curved-surface structure to be greater than 0.1, the refractive effect for emergent light can be improved.

In an optional embodiment, boundary lines between at least part of adjacent ones of the plurality of curved-surface structures are shaped in a curved manner.

In an optional embodiment, at least part of said boundary lines between adjacent ones of the plurality of curved-surface structures are arranged to follow a contour line of the plurality of curved-surface structures.

In a second aspect, the present application further provides an article having an anti-counterfeiting element, comprising: the above-mentioned anti-counterfeiting element.

Beneficial effect: Since the article having an anti-counterfeiting element comprises the above-mentioned anti-counterfeiting element, it has the same effect as that of the above-mentioned anti-counterfeiting element, which is not repeated herein.

### BRIEF DESCRIPTION OF THE DRAWINGS

In order to explain more clearly technical schemes in specific embodiments of the present application or in the prior art, the drawings needed to be used in the description of specific embodiments or the prior art is briefly introduced below. Apparently, the drawings described below only represent some embodiments of the present application, and other drawings may be obtained from these drawings without any creative efforts by a person skilled in the art.
FIG. 1 is a structural schematic diagram of an anti-counterfeiting element according to an embodiment of the present application;
FIG. 2 is a structural schematic diagram of a cross-section of the anti-counterfeiting element in a plane along both a first direction and a height direction;
FIG. 3 is a structural schematic diagram of a cross-section of the anti-counterfeiting element in a plane along both a second direction and a height direction.

Reference numerals:
1-first direction; 2-second direction; 3-height direction; 4-substrate; 5-feature area; 6-curved-surface structure.

### DETAILED DESCRIPTION

In order to make the purpose, technical scheme and advantages of the embodiments of the present application more clearly understood, the technical schemes of the embodiments of the present application will be clearly and completely described in conjunction with the accompanying drawings of the embodiments of the present application. Apparently, the described embodiments only represent part of the embodiments of the present application, but not all of them. Based on the described embodiments in the present application, all other embodiments obtainable by a person skilled in the art without making creative efforts fall within the scope of protection of the present application.

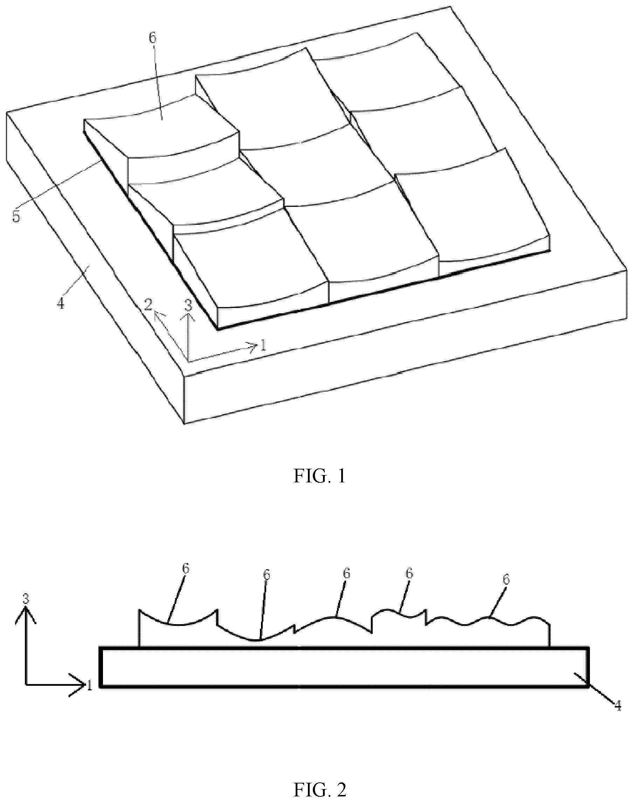

Embodiments of the present application will be described below in conjunction with FIGS. 1 to 3.

According to an embodiment of the present application, in one aspect, an anti-counterfeiting element is provided and comprises: a substrate 4, a surface of the substrate 4 being provided with a feature area 5, the feature area 5 comprising a plurality of curved-surface structures 6; wherein each curved-surface structure 6 has a first direction 1 and a second direction 2 both parallel to the surface of the substrate 4, and the first direction 1 and the second direction 2 refer to the direction indicated by the arrow 1 and the direction indicated by the arrow 2 in FIG. 1, respectively, the curved-surface structure 6 is shaped in a curved manner along the first direction 1, and a bending degree of the curved-surface structure 6 along the second direction 2 is less than that of the curved-surface structure 6 along the first direction 1. By the arrangement of the plurality of curved-surface structures 6 arranged in the feature area 5, with each curved-surface structure 6 being shaped in a curved manner along the first direction 1, for incident light in a predetermined direction, emergent light from the curved-surface structure 6 can come out over a fan-shaped direction range, so that angle distribution of the emergent light is more uniform, that is, an effect equivalent to the combination effect obtained by a plurality of reflective facets in the prior art can be obtained with each single curved-surface structure, therefore, not only a dynamic effect with higher resolution can be achieved, but also a more uniform angle distribution of emergent light can be achieved, so that a finer and more stable appearance pattern can be realized, thereby increasing the viewable angle range.

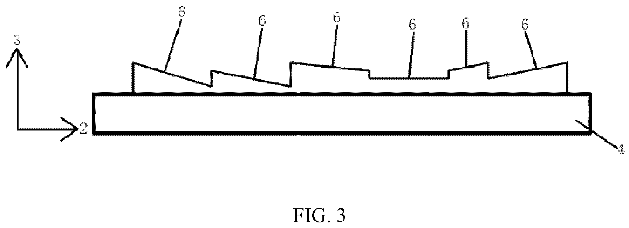

Figure 1 is only an example showing that the feature area 5 includes 9 curved-surface structures 6, and in practice, the size of one curved-surface structure 6 is at least one order of magnitude smaller than that of the feature area 5, so there would be a considerable number of curved-surface structures 6 in one feature area 5, while only a small number of curved-surface structures 6 are shown in the figure, they do not represent actual parameters such as dimension, proportion and quantity thereof. FIGS. 2 and 3 are the same as FIG. 1 in this respect, and are only exemplary cross-sectional views showing several curved-surface structures 6, and do not represent actual parameters such as dimension, proportion and quantity thereof.

In this embodiment, the bending degrees of the curved-surface structure 6 along both the first direction 1 and the second direction 2 are measured by a slope. As an alternative embodiment, the bending degree of the curved-surface structure 6 along the first direction 1 and the second direction 2 may also be measured by a tilt angle, or other measurements.

Wherein slope distributions of the curved-surface structure 6 along both the first direction 1 and the second direction 2 are continuous. By setting the slope distribution of the curved-surface structure 6 along both the first direction 1 and the second direction 2 to be continuous, there is no sharp corner on the curved-surface structure 6, so that the angles of emergent light are more uniform, the efficiency of emergent light is higher, and the quality of final product is higher.

In order to increase the viewable angle range of emergent light, a slope difference along the first direction 1 of at least two segments of the curved-surface structure 6 is greater than 0.1. As an alternative embodiment, it may also be that the slope difference along the first direction 1 of at least two segments of the curved-surface structure 6 is between 0.05 and 0.1.

In one embodiment, respective ones of the plurality of curved-surface structures 6 have the same slope distribution range along the first direction 1. By setting respective ones of the plurality of curved-surface structures 6 to have the same slope distribution range along the first direction 1, the angle range of emergent light from each curved-surface structure 6 is roughly the same, so that the efficiency of emergent light is higher. As an alternative embodiment, respective ones of the plurality of curved-surface structures 6 may also have different slope distribution ranges along the first direction 1, or have slope distribution ranges that partially coincide.

As shown in FIG. 2, the cross-sectional shapes of respective ones of the plurality of curved-surface structures 6 along the first direction 1 may be convex, concave, or having both a convex portion and a concave portion so as to be wavy, and the cross-sectional shapes of respective ones of the plurality of curved-surface structures 6 along the first direction 1 may partially coincide, or completely not coincide, or have the same cross-sectional shapes, or have different cross-sectional shapes. The specific cross-sectional shapes can be set according to actual demand, which is not overly restricted herein.

Since the cross-section of the curved-surface structure 6 along the first direction 1 is set to be convex or concave or wavy, a distance between the highest point and the lowest point of the cross-section of the curved-surface structure 6 along the first direction 1 can be set to be greater than 3µm. By this limitation, the distance between the highest point and the lowest point of the cross-section of the curved-surface structure 6 along the first direction 1 would not be too small, so as to prevent any undesired diffraction effect from being caused by very small distance. Of course, in specific settings, the distance between the highest point and the lowest point of the cross-section of the surface structure 6 along the first direction 1 may be set to 3.5µm, 4µm, 10µm, 40µm, etc., which is not overly restricted herein.

The direction perpendicular to the surface of the substrate 4 is a height direction 3, that is, the direction indicated by the arrow 3 in FIG. 2. The height herein refers to the undulation depth of the curved-surface structure 6 shaped in a curved manner, and respective ones of the plurality of curved-surface structures 6 have randomly-set height differences, which refers to that random height differences are set among respective ones of the plurality of curved-surface structures 6 as in FIG. 2. The height difference being randomly set herein refers to that some specific values are randomly generated by a computer and used as values of the height differences. By setting respective ones of the plurality of curved-surface structures 6 to have randomly-set height differences, the occurrence of undesired diffraction phenomena can be suppressed.

In order to suppress the occurrence of an undesired diffraction effect, the curved-surface structures 6 may be set in an irregular grid arrangement, such as a random mesh shape, such as that respective ones of the plurality of curved-surface structures 6 may have different areas and/or different outer contour shapes, and the like. In order to suppress the occurrence of an undesired diffraction effect, random height differences are set among respective ones of the plurality of curved-surface structures 6.

In one embodiment, an average slope of the curved-surface structure 6 along the second direction 2 is a predetermined value, and when an observation position is changed along the second direction 2, an observed appearance of the feature area 5 varies with the change of the observation position. By setting the average slope of the curved-surface structure 6 along the second direction 2 to a predetermined value, information of a dynamic effect can be encoded by means of the average slope of the curved-surface structure 6 along the second direction 2, so that the curved-surface structure 6 can achieve a pre-designed dynamic effect.

Wherein a slope difference along the second direction 2 within at least a portion of the curved-surface structure 6 is less than 0.05. Herein, said at least a portion of the curved-surface structure 6 along the second direction 2 may be at least 70% of the whole area. By setting a slope difference along the second direction 2 within at least a portion of the curved-surface structure 6 to be relatively small, the viewable angle range can be increased and the resolution can be improved. As an alternative embodiment, it may also be that a slope difference along the second direction 2 within at least a portion of the surface structure 6 is between 0.05 and 0.2.

Specifically, as shown in FIG. 3, the curved-surface structure 6 is substantially straight along the second direction 2. At this time, the extent to which the appearance of the observed feature area 5 varies with the change of the observation position when changing the observation position along the first direction 1 of the curved-surface structure 6 is smaller than the extent to which the appearance of the observed feature area 5 varies with the change of the observation position when changing the observation position along the second direction of curved-surface structure 6. At this time, the resolution of the curved-surface structure 6 is the highest, and the observable dynamic effect of the feature area 5 is the best.

As an optional embodiment, at least part of the plurality of curved-surface structures 6 are shaped in a curved manner along the second direction 2. Since the contour line of the curved-surface structures 6 is curved, the boundary lines between adjacent ones of the plurality of curved-surface structures 6 may be curved to follow the contour line, which is advantageous for reducing height difference at the boundaries thereof.

The direction perpendicular to the surface of the substrate 4 is a height direction 3, and a maximum height difference of a shape of the curved-surface structure 6 shaped in a curved manner along the second direction 2 is less than a maximum height difference of a shape of the curved-surface structure 6 shaped in a curved manner along the first direction 1, that is, the bending degree of the curved-surface structure 6 along the second direction 2 is less than that of the curved-surface structure 6 along the first direction 1.

Specifically, a length of the surface structure 6 along the second direction 2 is greater than 3µm and less than 20µm. By limiting the length of the curved-surface structure 6 along the second direction 2, the curved-surface structure 6 can be prevented from extending too long along the second direction 2, because the longer the curved-surface structure 6 is, the more difficult the production process thereof would be. As an alternative embodiment, it may also be that the length of the surface structure 6 along the second direction 2 is within another range, which is not overly restricted herein.

In one embodiment, the curved-surface structure 6 is covered with a metal layer and/or a dielectric layer, so that the reflection effect of the curved-surface structure 6 can be enhanced. Specifically, the curved-surface structure 6 can be at least partially covered with a metal-dielectric-metal three-layered structure, which can achieve an appearance having a color that varies with the change of the observation angle, such as an aluminum-silicon dioxide-chromium three-layered structure, and similar appearance effects can also be achieved by being covered with a dielectric-metal-dielectric three-layered structure, a multi-layered dielectric structure, and the like. As an alternative embodiment, only a metal layer or only a dielectric layer may be covered on the curved-surface structure 6. As an alternative embodiment, the curved-surface structure 6 may only partially be covered with a metal layer or a dielectric layer, or partially be covered with both a metal layer and a dielectric layer.

In one embodiment, the curved-surface structure 6 is at least partially provided with a secondary microstructure thereon, such as one-dimensional or two-dimensional gratings with a pitch of less than 450 nm. By setting the secondary microstructure, the color of reflected light can be modulated, and an appearance effect of at least two colors being viewable at a fixed observation angle can be achieved.

In one embodiment, a difference of refractive indices of materials on two sides of the curved-surface structure 6 is greater than 0.1. Since the two sides of the curved-surface structure 6 need to have a difference in refractive indices to achieve a refraction effect for light, the materials on the two sides of the curved-surface structure 6 may mean that one side of the curved-surface structure 6 is exposed in air, generally, the interface between air and a resin material has a large difference in refractive indices, or it means that the refractive indices of resin materials respectively on the two sides of the curved-surface structure 6 have a certain difference. The refraction effect for emergent light can be improved by limiting the difference between the refractive indices of materials on two sides of the curved-surface structure 6 to be greater than 0. 1.

In order to prolong the service life of the anti-counterfeiting element, a protective adhesive or a composite protective film may also be coated on the curved-surface structure 6.

According to the invention, for at least part of the plurality of curved-surface structures 6 , a slope difference along the first direction 1 is between 1.4 and 2.8 times of a maximum average slope along the second direction 2. wherein said slope difference refers to a maximum value of difference between slopes of segments of a cross-section line, the cross-section line is taken in a plane parallel to both the first direction 1 and a height direction 3 of the curved-surface structure 6 or the cross-section line is taken in a plane parallel to both the second direction 2 and the height direction 3 of the curved-surface structure 6. The slope difference of the cross-section line refers to the difference value between slopes of two segments with the largest difference between the slopes thereof on the cross-section line. The greater the slope difference, the greater the bending degree.

The consistency of the observable angles can be achieved by setting slope differences of the plurality of surface structures 6 along the first direction 1 to be between 1.4 and 2.8 times of the maximum average slope of the plurality of curved-surface structures 6 along the second direction 2. Since the maximum value of slope of the plurality of curved-surface structures 6 should be substantially the same along both the first direction 1 and the second direction 2, and the slope distribution of each single curved-surface structure 6 along the first direction 1 is substantially symmetrical, so that the maximum value of slope of each single curved-surface structure 6 along the first direction 1 is half of the slope difference of said single curved-surface structure 6; the slope differences of respective ones of the plurality of curved-surface structures 6 along the second direction 2 are different, and the maximum value of slope along the second direction 2 is the value of slope of a curved-surface structure 6 which has the maximum average slope along the second direction 2. Therefore, in the most ideal case, the slope difference of the plurality of curved-surface structures 6 along the first direction 1 should be 2 times of the maximum average slope of the plurality of curved-surface structures 6 along the second direction 2. As alternative embodiments, the slope difference of the plurality of curved-surface structures along the first direction 1 may be 1.4 times, or 1.5 times, or 2.5 times, or 2.8 times, of the maximum average slope of the plurality of curved-surface structures 6 along the second direction 2.

In one embodiment, boundary lines between at least part of adjacent ones of the plurality of curved-surface structures 6 are shaped in a curved manner, which facilitates reducing height fluctuation on the boundaries, reducing the overall height of the curved-surface structures 6, and thereby reducing production difficulty. Specifically, at least part of said boundary lines between adjacent ones of the plurality of curved-surface structures 6 are shaped to follow a contour line of the plurality of curved-surface structures 6. Since the boundary lines between the curved-surface structures 6 are shaped in a curved manner, and the curved-surface structures 6 are shaped at the boundary lines therebetween to follow a contour line of the curved-surface structures 6, the edges of the curved-surface structures 6 at the boundaries thereof are of equal height, and this arrangement can prevent height fluctuation at part of the edges of the curved-surface structures 6.

The anti-counterfeiting element disclosed in this embodiment has the advantages of high resolution and uniform distribution of the angles of emergent light. In this embodiment, by customizing the morphologies of the curved-surface structures 6 to increase the viewable angle range, an effect equivalent to the combination effect obtained by a plurality of randomly oriented optical facets in the prior art can be obtained with each single curved-surface structure 6, which can not only achieve a dynamic effect with higher resolution, but also achieve a more uniform distribution of the angles of emergent light, so as to achieve a finer and more stable appearance pattern.

The anti-counterfeiting element disclosed in this embodiment is more difficult to counterfeit, the curved-surface structures 6 with customized morphologies have higher degree of freedom, and more parameters are required to describe each single curved-surface structure 6, which are difficult to measure, and even more difficult to be copied and counterfeited by a counterfeiter.

According to embodiments of the present application, in another aspect, an article having an anti-counterfeiting element is also provided and comprises: the above-mentioned anti-counterfeiting element.

The article with the anti-counterfeiting element in this embodiment is a banknote. As an alternative embodiment, the article having the anti-counterfeiting element may be an anti-counterfeiting paper, or an identity card or other valuable document, such as a chip card, a check, a receipt, a contract, a credit card, and the like.

Among them, a part of the structure of the anti-counterfeiting element can be embedded in the banknote, and another part of the structure thereof is exposed outside. As an alternative embodiment, the anti-counterfeiting element may be hot stamped onto the surface of the banknote by means of pre-coated hot-melt adhesive, or the anti-counterfeiting element may be pasted onto the surface of the banknote.

The anti-counterfeiting element may specifically be an anti-counterfeiting line, a sealing tape, an anti-counterfeiting tape, an anti-counterfeiting strip, a patch, a label, etc., so as to be applied to anti-counterfeiting paper, valuable documents and other such articles.

While embodiments of the present application are described with reference to the accompanying drawings, a person skilled in the art may make various modifications and variations within the scope defined by the appended claims.

## Claims

1. An anti-counterfeiting element, comprising:
a substrate (4), a surface of the substrate (4) being provided with a feature area (5), the feature area (5) comprising a plurality of curved-surface structures (6);
wherein each curved-surface structure (6) has a first direction (1) and a second direction (2) both parallel to the surface of the substrate (4), the curved-surface structure (6) is shaped in a curved manner along the first direction (1), and a bending degree of the curved-surface structure (6) along the second direction (2) is less than that of the curved-surface structure (6) along the first direction (1),
**characterized in that**
for at least part of the plurality of curved-surface structures (6), a slope difference along the first direction (1) is between 1.4 and 2.8 times of a maximum average slope along the second direction (2); wherein said slope difference refers to a maximum value of difference between slopes of segments of a cross-section line, the cross-section line is taken in a plane parallel to both the first direction (1) and a height direction (3) of the curved-surface structure (6) or the cross-section line is taken in a plane parallel to both the second direction (2) and the height direction (3) of the curved-surface structure (6).

2. The anti-counterfeiting element according to claim 1, **characterized in that**, the bending degrees of the curved-surface structure (6) along both the first direction (1) and the second direction (2) are measured by a slope.

3. The anti-counterfeiting element according to claim 2, **characterized in that**,
slope distributions of the curved-surface structure (6) along both the first direction (1) and the second direction (2) are continuous;
or a slope difference along the first direction (1) of at least two segments of the curved-surface structure (6) is greater than 0.05;
or a slope difference along the first direction (1) of at least two segments of the curved-surface structure (6) is greater than 0.1;
or respective ones of the plurality of curved-surface structures (6) have the same slope distribution range along the first direction (1).

4. The anti-counterfeiting element according to claim 1, **characterized in that**,
cross-sections of respective ones of the plurality of curved-surface structures (6) along the first direction (1) at least partially coincide;
or cross-sections of respective ones of the plurality of curved-surface structures (6) along the first direction (1) have identical shapes;
or a cross-section of the curved-surface structure (6) along the first direction (1) is convex and/or concave;
or a distance between the highest point and the lowest point of a cross-section of the curved-surface structure (6) along the first direction (1) is greater than 3µm.

5. The anti-counterfeiting element according to any one of claims 1-4, **characterized in that**, an average slope of the curved-surface structure (6) along the second direction (2) is a predetermined value, and when an observation position is changed along the second direction (2), an observed appearance of the feature area (5) varies with the change of the observation position.

6. The anti-counterfeiting element according to claim 5, **characterized in that**,
a slope difference along the second direction (2) within at least a portion of the curved-surface structure (6) is less than 0.2;
or a slope difference along the second direction (2) within at least a portion of the curved-surface structure (6) is less than 0.05;
or the curved-surface structure (6) is substantially straight along the second direction (2).

7. The anti-counterfeiting element according to any one of claims 1 to 4, **characterized in that**, at least part of the plurality of curved surface structures (6) are shaped in a curved manner along the second direction (2).

8. The anti-counterfeiting element according to claim 7, **characterized in that**, a direction perpendicular to the surface of the substrate (4) is a height direction (3), and a maximum height difference of a shape of the curved-surface structure (6) shaped in a curved manner along the second direction (2) is less than a maximum height difference of a shape of the curved-surface structure (6) shaped in a curved manner along the first direction (1), such that the bending degree of the curved-surface structure (6) along the second direction (2) is less than that of the curved-surface structure (6) along the first direction (1).

9. The anti-counterfeiting element according to any one of claims 1 to 4, **characterized in that**, a length of the curved-surface structure (6) along the second direction (2) is less than 20µm; and/or, a length of the curved-surface structure (6) along the second direction (2) is greater than 3µm.

10. The anti-counterfeiting element according to any one of claims 1 to 4, **characterized in that**, a direction perpendicular to the surface of the substrate (4) is a height direction (3), and respective ones of the plurality of curved surface structures (6) have randomly-set height differences.

11. The anti-counterfeiting element according to any one of claims 1 to 4, **characterized in that**,
the curved-surface structure (6) is at least partially covered with a metal layer;
and/or, the curved-surface structure (6) is at least partially covered with a dielectric layer;
and/or, the curved-surface structure (6) is at least partially provided with a secondary microstructure thereon;
and/or, a difference of refractive indices of materials on two sides of the curved-surface structure (6) is greater than 0.1.

12. The anti-counterfeiting element according to any one of claims 1 to 4, **characterized in that**, boundary lines between at least part of adjacent ones of the plurality of curved-surface structures (6) are shaped in a curved manner.

13. The anti-counterfeiting element according to claim 12, **characterized in that**, at least part of said boundary lines between adjacent ones of the plurality of curved-surface structures (6) are arranged to follow a contour line of the plurality of curved-surface structures (6).

14. An article having an anti-counterfeiting element, **characterized in** comprising:
the anti-counterfeiting element according to any one of claims 1 to 13.

## Patentansprüche

1. Fälschungssicheres Element, umfassend:
ein Substrat (4), wobei eine Oberfläche des Substrats (4) mit einem Merkmalsbereich (5) versehen ist, und wobei der Merkmalsbereich (5) mehrere gekrümmte Oberflächenstrukturen (6) umfasst;
wobei jede gekrümmte Oberflächenstruktur (6) eine erste Richtung (1) und eine zweite Richtung (2) aufweist, die beide parallel zur Oberfläche des Substrats (4) verlaufen, und wobei die gekrümmte Oberflächenstruktur (6) entlang der ersten Richtung (1) gekrümmt ausgebildet ist und ein Krümmungsgrad der gekrümmten Oberflächenstruktur (6) entlang der zweiten Richtung (2) geringer ist als derjenige der gekrümmten Oberflächenstruktur (6) entlang der ersten Richtung (1),
**dadurch gekennzeichnet, dass**
für zumindest einen Teil der mehreren gekrümmten Oberflächenstrukturen (6) eine Neigungsdifferenz entlang der ersten Richtung (1) zwischen dem 1,4-Fachen und dem 2,8-Fachen einer maximalen mittleren Neigung entlang der zweiten Richtung (2) liegt; wobei sich die Neigungsdifferenz auf einen Maximalwert einer Differenz zwischen den Neigungen von Abschnitten einer Schnittlinie bezieht, wobei die Schnittlinie in einer Ebene genommen ist, die sowohl parallel zur ersten Richtung (1) als auch zu einer Höhenrichtung (3) der gekrümmten Oberflächenstruktur (6) verläuft, oder wobei die Schnittlinie in einer Ebene genommen ist, die sowohl parallel zur zweiten Richtung (2) als auch zur Höhenrichtung (3) der gekrümmten Oberflächenstruktur (6) verläuft.

2. Fälschungssicheres Element nach Anspruch 1, **dadurch gekennzeichnet, dass**
die Krümmungsgrade der gekrümmten Oberflächenstruktur (6) sowohl entlang der ersten Richtung (1) als auch entlang der zweiten Richtung (2) durch eine Neigung gemessen werden.

3. Fälschungssicheres Element nach Anspruch 2, **dadurch gekennzeichnet, dass**
die Neigungsverteilungen der gekrümmten Oberflächenstruktur (6) sowohl entlang der ersten Richtung (1) als auch entlang der zweiten Richtung (2) kontinuierlich sind; oder
eine Neigungsdifferenz entlang der ersten Richtung (1) von zumindest zwei Abschnitten der gekrümmten Oberflächenstruktur (6) größer als 0,05 ist; oder
eine Neigungsdifferenz entlang der ersten Richtung (1) von zumindest zwei Abschnitten der gekrümmten Oberflächenstruktur (6) größer als 0,1 ist; oder
die einzelnen gekrümmten Oberflächenstrukturen (6) der mehreren gekrümmten Oberflächenstrukturen (6) denselben Neigungsverteilungsbereich entlang der ersten Richtung (1) aufweisen.

4. Fälschungssicheres Element nach Anspruch 1, **dadurch gekennzeichnet, dass**
Schnitte der einzelnen gekrümmten Oberflächenstrukturen (6) der mehreren gekrümmten Oberflächenstrukturen (6) entlang der ersten Richtung (1) zumindest teilweise zusammenfallen; oder
Schnitte der einzelnen gekrümmten Oberflächenstrukturen (6) der mehreren gekrümmten Oberflächenstrukturen (6) entlang der ersten Richtung (1) identische Formen aufweisen; oder
ein Schnitt der gekrümmten Oberflächenstruktur (6) entlang der ersten Richtung (1) konvex und/oder konkav ist; oder
ein Abstand zwischen dem höchsten Punkt und dem niedrigsten Punkt eines Schnitts der gekrümmten Oberflächenstruktur (6) entlang der ersten Richtung (1) größer als 3 µm ist.

5. Fälschungssicheres Element nach einem der Ansprüche 1 bis 4, **dadurch gekennzeichnet, dass**
eine mittlere Neigung der gekrümmten Oberflächenstruktur (6) entlang der zweiten Richtung (2) ein vorbestimmter Wert ist und sich bei einer Änderung einer Beobachtungsposition entlang der zweiten Richtung (2) ein beobachtetes Erscheinungsbild des Merkmalsbereichs (5) mit der Änderung der Beobachtungsposition verändert.

6. Fälschungssicheres Element nach Anspruch 5, **dadurch gekennzeichnet, dass**
eine Neigungsdifferenz entlang der zweiten Richtung (2) innerhalb zumindest eines Teils der gekrümmten Oberflächenstruktur (6) kleiner als 0,2 ist; oder
eine Neigungsdifferenz entlang der zweiten Richtung (2) innerhalb zumindest eines Teils der gekrümmten Oberflächenstruktur (6) kleiner als 0,05 ist; oder
die gekrümmte Oberflächenstruktur (6) entlang der zweiten Richtung (2) im Wesentlichen geradlinig verläuft.

7. Fälschungssicheres Element nach einem der Ansprüche 1 bis 4, **dadurch gekennzeichnet, dass**
zumindest ein Teil der mehreren gekrümmten Oberflächenstrukturen (6) entlang der zweiten Richtung (2) gekrümmt ausgebildet ist.

8. Fälschungssicheres Element nach Anspruch 7, **dadurch gekennzeichnet, dass**
eine zur Oberfläche des Substrats (4) senkrechte Richtung eine Höhenrichtung (3) ist und ein maximaler Höhenunterschied einer entlang der zweiten Richtung (2) gekrümmt ausgebildeten Form der gekrümmten Oberflächenstruktur (6) kleiner ist als ein maximaler Höhenunterschied einer entlang der ersten Richtung (1) gekrümmt ausgebildeten Form der gekrümmten Oberflächenstruktur (6), sodass der Krümmungsgrad der gekrümmten Oberflächenstruktur (6) entlang der zweiten Richtung (2) geringer ist als derjenige der gekrümmten Oberflächenstruktur (6) entlang der ersten Richtung (1).

9. Fälschungssicheres Element nach einem der Ansprüche 1 bis 4, **dadurch gekennzeichnet, dass**
eine Länge der gekrümmten Oberflächenstruktur (6) entlang der zweiten Richtung (2) kleiner als 20 µm ist; und/oder dass eine Länge der gekrümmten Oberflächenstruktur (6) entlang der zweiten Richtung (2) größer als 3 µm ist.

10. Fälschungssicheres Element nach einem der Ansprüche 1 bis 4, **dadurch gekennzeichnet, dass**
eine zur Oberfläche des Substrats (4) senkrechte Richtung eine Höhenrichtung (3) ist und die einzelnen gekrümmten Oberflächenstrukturen (6) der mehreren gekrümmten Oberflächenstrukturen (6) zufällig festgelegte Höhenunterschiede aufweisen.

11. Fälschungssicheres Element nach einem der Ansprüche 1 bis 4, **dadurch gekennzeichnet, dass**
die gekrümmte Oberflächenstruktur (6) zumindest teilweise mit einer Metallschicht bedeckt ist; und/oder
die gekrümmte Oberflächenstruktur (6) zumindest teilweise mit einer dielektrischen Schicht bedeckt ist; und/oder
die gekrümmte Oberflächenstruktur (6) zumindest teilweise mit einer Sekundärmikrostruktur versehen ist; und/oder
eine Differenz der Brechungsindizes von Materialien auf beiden Seiten der gekrümmten Oberflächenstruktur (6) größer als 0,1 ist.

12. Fälschungssicheres Element nach einem der Ansprüche 1 bis 4, **dadurch gekennzeichnet, dass**
Grenzlinien zwischen zumindest einem Teil benachbarter gekrümmter Oberflächenstrukturen (6) der mehreren gekrümmten Oberflächenstrukturen (6) gekrümmt ausgebildet sind.

13. Fälschungssicheres Element nach Anspruch 12, **dadurch gekennzeichnet, dass**
zumindest ein Teil der Grenzlinien zwischen benachbarten gekrümmten Oberflächenstrukturen (6) der mehreren gekrümmten Oberflächenstrukturen (6) so angeordnet ist, dass er einer Konturlinie der mehreren gekrümmten Oberflächenstrukturen (6) folgt.

14. Artikel mit einem fälschungssicheren Element, **dadurch gekennzeichnet, dass** er das fälschungssichere Element nach einem der Ansprüche 1 bis 13 umfasst.

## Revendications

1. Élément anti-contrefaçon, comprenant :
un substrat (4), une surface du substrat (4) étant pourvue d'une zone-caractéristique (5), la zone-caractéristique (5) comprenant une pluralité de structures à surface courbée (6) ;
dans lequel chaque structure à surface courbée (6) a une première direction (1) et une seconde direction (2) les deux parallèles à la surface du substrat (4), la structure à surface courbée (6) est formée d'une manière courbée le long de la première direction (1), et un degré de courbure de la structure à surface courbée (6) le long de la seconde direction (2) est inférieur à celui de la structure à surface courbée (6) le long de la première direction (1),
**caractérisé en ce que**
pour au moins une partie de la pluralité de structures à surface courbée (6), une différence de pente le long de la première direction (1) est entre 1,4 et 2,8 fois d'une pente moyenne maximum le long de la seconde direction (2) ; dans lequel ladite différence de pente fait référence à une valeur maximum de différence entre des pentes de segments d'une ligne de section transversale, la ligne de section transversale est prise dans un plan parallèle aux deux de la première direction (1) et d'une direction de hauteur (3) de la structure à surface courbée (6) ou la ligne de section transversale est prise dans un plan parallèle aux deux de la seconde direction (2) et de la direction de hauteur (3) de la structure à surface courbée (6).

2. Élément anti-contrefaçon selon la revendication 1, **caractérisé en ce que** les degrés de courbure de la structure à surface courbée (6) le long des deux de la première direction (1) et de la seconde direction (2) sont mesurés par une pente.

3. Élément anti-contrefaçon selon la revendication 2, **caractérisé en ce que**
des distributions de pente de la structure à surface courbée (6) le long des deux de la première direction (1) et de la seconde direction (2) sont continues ;
ou une différence de pente le long de la première direction (1) d'au moins deux segments de la structure à surface courbée (6) est supérieure à 0,05 ;
ou une différence de pente le long de la première direction (1) d'au moins deux segments de la structure à surface courbée (6) est supérieure à 0,1 ;
ou des structures respectives de la pluralité de structures à surface courbée (6) ont la même plage de distributions de pente le long de la première direction (1).

4. Élément anti-contrefaçon selon la revendication 1, **caractérisé en ce que**
des sections transversales de structures respectives de la pluralité de structures à surface courbée (6) le long de la première direction (1) coïncident au moins partiellement ;
ou des sections transversales de structures respectives de la pluralité de structures à surface courbée (6) le long de la première direction (1) ont des formes identiques ;
ou une section transversale de la structure à surface courbée (6) le long de la première direction (1) est convexe et/ou concave ;
ou une distance entre le point le plus haut et le point le plus bas d'une section transversale de la structure à surface courbée (6) le long de la première direction (1) est supérieure à 3 µm.

5. Élément anti-contrefaçon selon l'une quelconque des revendications 1 à 4, **caractérisé en ce qu'**une pente moyenne de la structure à surface courbée (6) le long de la seconde direction (2) est d'une valeur prédéterminée, et, lorsqu'une position d'observation est changée le long de la seconde direction (2), une apparence observée de la zone-caractéristique (5) varie avec le changement de la position d'observation.

6. Élément anti-contrefaçon selon la revendication 5, **caractérisé en ce que**
une différence de pente le long de la seconde direction (2) dans les limites d'au moins une portion de la structure à surface courbée (6) est inférieure à 0,2 ;
ou une différence de pente le long de la seconde direction (2) dans les limites d'au moins une portion de la structure à surface courbée (6) est inférieure à 0,05 ;
ou la structure à surface courbée (6) est sensiblement droite le long de la seconde direction (2).

7. Élément anti-contrefaçon selon l'une quelconque des revendications 1 à 4, **caractérisé en ce qu'**au moins une partie de la pluralité de structures de surface courbée (6) est formée d'une manière courbée le long de la seconde direction (2).

8. Élément anti-contrefaçon selon la revendication 7, **caractérisé en ce qu'**une direction perpendiculaire à la surface du substrat (4) est une direction de hauteur (3), et une différence de hauteur maximum d'une forme de la structure à surface courbée (6) formée de manière courbée le long de la seconde direction (2) est inférieure à une différence de hauteur maximum d'une forme de la structure à surface courbée (6) formée de manière courbée le long de la première direction (1), de manière telle que le degré de courbure de la structure à surface courbée (6) le long de la seconde direction (2) est inférieur à celui de la structure à surface courbée (6) le long de la première direction (1).

9. Élément anti-contrefaçon selon l'une quelconque des revendications 1 à 4, **caractérisé en ce qu'**une longueur de la structure à surface courbée (6) le long de la seconde direction (2) est inférieur à 20 µm ; et/ou une longueur de la structure à surface courbée (6) le long de la seconde direction (2) est supérieur à 3 µm.

10. Élément anti-contrefaçon selon l'une quelconque des revendications 1 à 4, **caractérisé en ce qu'**une direction perpendiculaire à la surface du substrat (4) est une direction de hauteur (3), et des structures respectives de la pluralité de structures de surface courbée (6) ont des différences de hauteur réglées aléatoirement.

11. Élément anti-contrefaçon selon l'une quelconque des revendications 1 à 4, **caractérisé en ce que**
la structure à surface courbée (6) est au moins partiellement couverte avec une couche métallique ;
et/ou la structure à surface courbée (6) est au moins partiellement couverte avec une couche diélectrique ;
et/ou la structure à surface courbée (6) est au moins partiellement pourvue d'une microstructure secondaire sur celle-ci ;
et/ou une différence d'indices de réfraction de matériaux sur deux côtés de la structure à surface courbée (6) est supérieure à 0,1.

12. Élément anti-contrefaçon selon l'une quelconque des revendications 1 à 4, **caractérisé en ce que** des lignes de limite entre au moins une partie de structures adjacentes de la pluralité de structures à surface courbée (6) sont formées de manière courbée.

13. Élément anti-contrefaçon selon la revendication 12, **caractérisé en ce qu'**au moins une partie desdites lignes de limite entre des structures adjacentes de la pluralité de structures à surface courbée (6) est agencée pour suivre une ligne de contour de la pluralité de structures à surface courbée (6).

14. Article ayant un élément anti-contrefaçon, **caractérisé en ce qu'**il comprend :
l'élément anti-contrefaçon selon l'une quelconque des revendications 1 à 13.
